**Europäisches Patentamt**

(19) **European Patent Office**

**Office européen des brevets**

(11) Veröffentlichungsnummer : **0 398 113 B1**

(12) **EUROPÄISCHE PATENTSCHRIFT**

(45) Veröffentlichungstag der Patentschrift :
20.10.93 Patentblatt 93/42

(51) Int. Cl.$^5$ : **C09K 7/02**

(21) Anmeldenummer : **90108534.0**

(22) Anmeldetag : **07.05.90**

(54) **Verwendung ausgewählter Esteröle in Wasser-basierten Bohrspülungen vom O/W-Emulsionstyp sowie entsprechende Bohrspülflüssigkeiten mit verbesserter ökologischer Verträglichkeit.**

Verbunden mit 90907002.1/0472559
(europäische
Anmeldenummer/Veröffentlichungsnummer)
durch Entscheidung vom 14.08.92.

(30) Priorität : **16.05.89 DE 3915876**

(43) Veröffentlichungstag der Anmeldung :
**22.11.90 Patentblatt 90/47**

(45) Bekanntmachung des Hinweises auf die
Patenterteilung :
**20.10.93 Patentblatt 93/42**

(84) Benannte Vertragsstaaten :
**AT BE DE DK FR GR IT NL**

(56) Entgegenhaltungen :
**EP-A- 0 009 746**
**EP-A- 0 271 943**

(56) Entgegenhaltungen :
**DE-A- 3 419 415**
**US-A- 3 507 792**
**US-A- 4 631 136**
**US-A- 4 846 986**

(73) Patentinhaber : **Henkel**
**Kommanditgesellschaft auf Aktien**
**D-40191 Düsseldorf (DE)**

(72) Erfinder : **Müller, Heinz**
**Goldregenweg 4**
**D-4019 Monheim (DE)**
Erfinder : **Herold, Claus-Peter, Dr.**
**Ostpreussenstrasse 26**
**D-4020 Mettmann (DE)**
Erfinder : **Von Tapavicza, Stephan, Dr.**
**Thomas-Mann-Strasse 12**
**D-4006 Erkrath 2 (DE)**
Erfinder : **Fues, Johann-Friedrich, Dr.**
**Herzogstrasse 15**
**D-4048 Grevenbroich 5 (DE)**

## Beschreibung

Die Erfindung beschreibt neue Bohrspülflüssigkeiten auf Basis wasser-basierter O/W-Emulsionen und darauf aufgebaute O/W-Emulsionsbohrspülschlämme, die sich durch hohe ökologische Verträglichkeit bei gleichzeitig guten Stand- und Gebrauchseigenschaften auszeichnen. Ein wichtiges Einsatzgebiet für die neuen Bohrspülsysteme sind off-shore-Bohrungen zur Erschließung von Erdöl- und/oder Erdgasvorkommen, wobei es hier die Erfindung insbesondere darauf abstellt, technisch brauchbare Bohrspülungen mit hoher ökologischer Verträglichkeit zur Verfügung zu stellen. Der Einsatz der neuen Bohrspülsysteme hat zwar besondere Bedeutung im marinen Bereich, ist aber nicht darauf beschränkt. Die neuen Spülsysteme können ganz allgemeine Verwendung auch bei landgestützten Bohrungen finden, also auch hier zur Erschließung von Erdöl- und/oder Erdgasvorkommen. dienen. Sie sind aber neue wertvolle Arbeitsmittel beispielsweise auch beim. Geothermiebohren, beim Wasserbohren, bei der Durchführung geowissenschaftlicher Bohrungen und bei Bohrungen im Bergbaubereich. Grundsätzlich gilt, daß durch die erfindungsgemäß ausgewählten, neuen Wasser-basierten O/W-Bohrspülflüssigkeiten der öko-toxische Problembereich substantiell vereinfacht wird.

## Zum Stand der Technik

Flüssige Spülsysteme zur Niederbringung von Gesteinsbohrungen unter Aufbringen des abgelösten Bohrkleins sind bekanntlich beschränkt eingedickte, fließfähige Systeme, die einer der drei folgenden Klassen zugeordnet werden können:

Rein-wäßrige Bohrspülflüssigkeiten, Bohrspülsysteme auf Ölbasis, die in der Regel als sogenannte Invert-Emulsionsschlämme eingesetzt werden und Zubereitungen vom Typ der W/O-Emulsionen darstellen, bei denen die wäßrige Phase heterogen fein-dispers in der geschlossenen Ölphase verteilt ist. Die dritte Klasse der bekannten Bohrspülflüssigkeiten ist auf Wasser-basierten O/W-Emulsionen aufgebaut, d.h. auf Flüssigsystemen, die in einer geschlossenen wäßrigen Phase eine heterogene, feindisperse Ölphase enthalten. Die Erfindung beschreibt verbesserte Systeme dieser zuletzt genannten Art.

Bohrspülflüssigkeiten solcher O/W-Emulsionssysteme nehmen in ihren Gebrauchseigenschaften eine Zwischenstellung ein zwischen den rein wäßrigen Systemen und den Öl-basierten Invert-Spülungen. Die Vorteile aber auch Nachteile rein wäßriger Systeme verbinden sich mit den Vor- und Nachteilen der bis heute beschriebenen Öl-basierten Invert-Emulsionen. Ausführliche Sachinformationen finden sich in der einschlägigen Fachliteratur, verwiesen sei beispielsweise auf das Fachbuch George R. Gray und H.C.H. Darley, "Composition in Properties of Oil Well Drilling Fluids", 4. Auflage, 1980/81, Gulf Publishing Company, Houston, und die umfangreiche, darin zitierte Sach- und Patentliteratur sowie auf das Handbuch "Applied Drilling Engineering", Adam T. Bourgoyne, Jr. et al., First Printing Society of Petroleum Engineers, Richardson, Texas (USA).

Eine der Hauptschwächen rein Wasser-basierter Bohrspülsysteme liegt in der Interaktion wasserempfindlicher, insbesondere wasserquellbarer Gesteins- und/oder Salzformationen mit der wäßrigen Bohrspülflüssigkeit und den dadurch ausgelösten Sekundärfolgen, insbesondere Bohrlochinstabilität und Eindickung der Bohrspülung. Zahlreiche Vorschläge beschäftigen sich mit der Einschränkung dieses Problemkreises und haben beispielsweise zur Entwicklung der sogenannten Inhibitive Water-Base Muds geführt, vergl. beispielsweise "Applied Drilling Engineering", aao, Kapitel 2, Drilling Fluids, 2.4 sowie Gray und Darley aao, Kapitel 2, insbesondere die Unterkapitel auf den Seiten 50 bis 62 (Muds for "Heaving Shale", Muds for Deep Holes, Non-Dispersed Polymer Muds, Inhibited Muds: Potassium Compounds).

In der jüngeren Praxis haben sich insbesondere Bohrspülungen auf Ölbasis zur Bewältigung der geschilderten Schwierigkeiten durchgesetzt, die aus dem 3-Phasensystem Öl, Wasser und feinteilige Feststoffe bestehen und Zubereitungen vom Typ der W/0-Emulsionen sind. Öl-basierte Bohrspülungen waren ursprünglich auf Dieselölfraktionen mit einem Gehalt an Aromaten aufgebaut. Zur Entgiftung und Verminderung der damit geschaffenen ökologischen Problematik ist dann vorgeschlagen worden, weitgehend aromatenfreie Kohlenwasserstofffraktionen - heute auch als "Non-Polluting Oils" bezeichnet - als geschlossene Ölphase einzusetzen, siehe hierzu beispielsweise die Veröffentlichungen E.A. Boyd et al. "New Base Oil Used in Low Toxicity Oil Muds", Journal of Petroleum Technology, 1985, 137 - 143 sowie R.B. Bennet "New Drilling Fluid Technology - Mineral Oil Mud", Journal of Petroleum Technology, 1984, 975 - 981 sowie die darin zitierte Literatur.

Auch die Bohrspülflüssigkeiten vom Typ der Wasser-basierten O/W-Emulsionssysteme benutzen bis heute reine Kohlenwasserstofföle als dipserse Ölphase, vergl. hierzu beispielsweise Gray, Darley aao., S. 51/52 unter Kapitel "Oil Emulsion Muds" sowie die tabellarische Zusammenstellung auf S. 25 (Table 1-3) mit den Angaben zu Wasser-basierten Emulsionsspülungen vom Typ der Salt Water Muds, Lime Muds, Gyp Muds und CL-CLS-Muds.

Bekannt ist in diesem Zusammenhang insbesondere, daß Wasser-basierte O/W-Emulsionsspülungen eine substantielle Verbesserung der rein Wasser-basierten Bohrspülsysteme in vielfacher Hinsicht bedeuten. Gerade in jüngster Zeit werden aber auch kritisch die Vorund Nachteile solcher Wasser-basierter Emulsionsspülungen im Vergleich mit den Öl-basierten Invert-Systemen verglichen. Anlaß hierfür sind die beträchtlichen ökologischen Bedenken, die heute gegen die zur Zeit gebräuchlichen, Öl-basierten Invert-Spülungen bestehen.

Diese ökologischen Bedenken lassen sich in zwei Problembereiche unterteilen:

Alle Bohrspülsysteme auf Wasser- und/oder Ölbasis benötigen neben den Grundbestandteilen Öl und Wasser eine Mehrzahl von Zusatzstoffen zur Einstellung der gewünschten Gebrauchseigenschaften. Genannt seien hier lediglich beispielhaft Emulgatoren bzw. Emulgatorsysteme, Beschwerungsmittel, Fluid-Loss-Additive, Netzmittel, Alkalireserven, Viskositätsregler, gegebenenfalls Hilfsstoffe zur Inhibierung erbohrten Gesteins erhöhter Wasserempfindlichkeit, Desinfektionsmittel und dergleichen. Eine ausführliche Zusammenstellung befindet sich beispielsweise in Gray und Darley, aao., Kapitel 11, "Drilling Fluid Components". Die Praxis hat dabei aus heutiger Sicht ökologisch unbedenkliche Zusatzstoffe, aber auch ökologisch bedenkliche oder gar ökologisch unerwünschte Zusatzstoffe entwickelt.

Der zweite Problemkreis wird durch die im Rahmen solcher Bohrspülungen eingesetzten Ölphasen bestimmt. Auch die heute als "Non-Polluting Oils" bezeichneten, weitgehend aromatenfreien Kohlenwasserstofffraktionen sind bei ihrer Freigabe in die Umwelt nicht unbedenklich. Eine weitere Minderung der Umweltproblematik - ausgelöst durch die flüssigen Ölphasen der hier betroffenen Art - erscheint dringend erforderlich. Gültigkeit hat das insbesondere beim Niederbringen von Off-Shore-Bohrungen, beispielsweise zur Erschließung von Erdöl- bzw. Erdgas-Vorkommen, weil das marine Ökosystem besonders empfindlich auf das Einbringen von toxischen und schwer abbaubaren Substanzen reagiert.

Aus jüngerer Zeit bestehen einige Vorschläge zur Minderung dieser zuletzt genannten Problematik. So beschreiben die US-Patentschriften 4,374,737 und 4,481,121 Öl-basierte Invert-Bohrspülflüssigkeiten, in denen Non-Polluting Oils Verwendung finden sollen. Als Non-Polluting Oils werden nebeneinander und gleichwertig aromatenfreie Mineralölfraktionen und Pflanzenöle von der Art Erdnußöl, Sojabohnenöl, Leinsamenöl, Maisöl, Reisöl oder auch Öle tierischen Ursprungs wie Walöl genannt und durchweg handelt es sich bei den hier genannten Esterölen pflanzlichen und tierischen Ursprungs um Triglyceride natürlicher Fettsäuren, die bekanntlich eine hohe Umweltverträglichkeit besitzen und gegenüber Kohlenwasserstofffraktionen - auch wenn diese aromatenfrei sind - aus ökologischen Überlegungen deutliche Überlegenheit besitzen.

In den genannten US-Patentschriften beschreibt dann allerdings kein konkretes Beispiel die Verwendung solcher natürlicher Esteröle in Invert-Bohrspülungen. Durchweg werden Mineralölfraktionen als geschlossene Ölphase eingesetzt. Tatsächlich kommen Öle pflanzlichen und/oder tierischen Ursprungs der genannten Art für Invert-Bohrspülungen aus praktischen Gründen nicht in Betracht. Die rheologischen Eigenschaften solcher Ölphasen sind für den breiten, in der Praxis geforderten Temperaturbereich von 0 bis 5 °C einerseits, sowie bis zu 250 °C und darüber andererseits nicht in den Griff zu bekommen.

Die US-A-4 631 136 betrifft gleichfalls Bohrspülmittel auf Basis von W/O-Emulsionen. Die Ölphase besteht hierbei aus pflanzlichen oder vegetabilischen Ölen, die langkettige Fettsäuren mit 12 bis 24 C-Atomen und einem nur minimalen Anteil an Doppel- oder Dreifachbindungen enthalten. Zur Vermeidung von Problemen, die durch Doppel- oder Dreifachbindungen in derartigen natürlichen Ölen hervorgerufen werden können, enthalten die W/O-Emulsionen ferner insbesondere Antioxidantien.

In der DE-A-34 19 415 wird die Herstellung von Schmiermitteln, Schalölen und Bohremulsionen aus umweltfreundlichen Grundstoffen beschrieben. Als Ölgrundlage dienen hierzu pflanzliche, tierische und synthetische Ester mehrwertiger Alkohole, insbesondere Erdnußöl, Haselnußöl, Lebertran, Leinöl, Olivenöl, Ricinußöl, Rüböl, Sojaöl, Walöl und andere fette Öle. Bei den hier beschriebenen Bohremulsionen handelt es sich um O/W-Emulsionen, die in der spanabhebenden Industrie Verwendung finden sollen.

Gegenstand der EP-A-0 271 943 sind Bohrspülflüssigkeiten auf Basis von O/W-Emulsionen, die ethoxylierte Amine als Dispergatoren enthalten. Die Ölphase besteht hierbei aus Mineralölen, wie Dieselölen oder naphthenischen Ölen, sowie aus pflanzlichen oder anderen natürlichen Ölen.

Schließlich werden in der US-A-3 507 792 Schmier- und Kühlmittel für die Bearbeitung von Metall- oder Glaswaren beschrieben. Hierbei handelt es sich um O/W-Emulsionen, die als Ölphase biologisch abbaubare, ungesättigte Ester auf Basis aliphatischer Monocarbonsäuren mit 8 bis 30 C-Atomen und ein- oder mehrwertiger Alkohole mit 5 bis 30 C-Atomen und bis zu vier Hydroxylgruppen enthalten.

Die älteren Vorschläge der Anmelderin

Eine Reihe älterer Anmeldungen der Anmelderin schildert die Verwendung von biologisch leicht abbaubaren und ökologisch unbedenklichen Esterölen als geschlossene Ölphase in W/O-Invert-Bohrspülsystemen. Verwiesen wird insbesondere auf die älteren Anmeldungen DE-A-38 42 659 und DE-A-38 42 703 sowie die Abwandlungen brauchbarer Esteröle gemäß den Angaben der älteren Patentanmeldungen DE-A-39 07 391 und DE-A-39 07 392.

Gegenstand dieser älteren Anmeldungen ist die Verwendung von Esterölen auf Basis jeweils ausgewählter Monocarbonsäuren bzw. Monocarbonsäuregemische und monofunktioneller und gegebenenfalls mehrfunktioneller Alkohole als geschlossene Ölphase in W/O-Invert-Systemen. Die älteren Anmeldungen schildern, daß mit den dort offenbarten Estern bzw. Estergemischen nicht nur in der frischen Bohrspülung befriedigende rheologische Eigenschaften eingestellt werden können, sondern daß es auch gelingt, unter Mitverwendung ausgewählter, bekannter Alkalireserven in der Bohrspülung zu arbeiten ohne daß damit unerwünschte Verdickungen bei einer partiellen Esterhydrolyse zu befürchten sind.

Ein wichtige Weiterentwicklung solcher Invert-Bohrspülungen auf Esterölbasis ist Gegenstand der älteren Anmeldung DE-A-39 03 785 der Anmelderin.

Die Lehre dieser älteren Anmeldung geht von dem Konzept aus, in Invert-Bohrspülungen auf Basis von Esterölen ein zusätzliches Additiv mitzuverwenden, das geeignet ist, die erwünschten rheologischen Daten der Bohrspülung im geforderten Bereich auch dann zu halten, wenn im Gebrauch zunehmen größere Mengen an freien Carbonsäuren durch partielle Esterhydrolyse gebildet werden. Vorgesehen ist die Mitverwendung von basischen und zur Salzbildung mit Carbonsäuren befähigten Aminverbindungen ausgeprägt oleophiler Natur und höchstens beschränkter Wasserlöslichkeit als Additiv in der Ölphase.

Die Aufgabe der Erfindung und ihre technische Lösung

Die vorliegende Erfindung geht von der Aufgabe aus, Bohrspülsysteme höchster und in dieser Form bisher unbekannter ökologischer Verträglichkeit zu schaffen, die gleichzeitig gute Gebrauchseigenschaften aufweisen und eine befriedigende Verwendung insbesondere auch in Problemgebieten ermöglichen. Die Erfindung will dabei bewußt den Typ der Öl-basierten Invert-Bohrspülsysteme verlassen und zum Typ der Öl-modifizierten Wasser-basierten O/W-Emulsionssysteme zurückkehren. Dabei sollen aber die in den genannten älteren Anmeldungen der Anmelderin beschriebenen Hilfsmittel und die damit verbundenen ökologischen Vorteile nun auch in dieser Klasse von Bohrspülsystemen Verwendung finden.

Die Erfindung will damit in einer ersten Ausführungsform die Vorteile von O/W-Emulsionsspülsystemen gegenüber den reinen, Wasserbasierten Bohrspülungen ausnutzen, gleichzeitig aber die Mineralölphase wenigstens zu einem substantiellen Anteil - vorzugsweise vollständig - durch ökologisch unbedenkliche Esteröle austauschen.

In einem weiteren Ansatz will die Erfindung auch den zweiten Problemkreis der Zusatz- und Hilfsstoffe in Bohrspülungen dadurch ökologisch entschärfen, daß aus dem großen Bereich der hier bekannten Zusatzstoffe wenigstens überwiegend und vorzugsweise durchgängig solche Hilfsstoffe gewählt werden, die sich durch ökologische Unbedenklichkeit auszeichnen.

Gegenstand der Erfindung ist dementsprechend in einer ersten Ausführungsform die Verwendung von Wasser-emulgierbaren, bei Arbeitstemperatur flüssigen oder wenigstens plastisch verformbaren und Flammpunkte von wenigstens 80 °C aufweisenden Estern aus Monocarbonsäuren mit bis zu 5 C-Atomen und einwertigen Alkoholen mit wenigstens 6 C-Atomen und/oder mehrwertigen Alkoholen, wobei im Falle der Ester einwertiger Alkohole sich die Carbonsäurereste auch von Monocarbonsäuren mit bis zu 36 C-Atomen ableiten können, als überwiegender Bestandteil der dispersen Ölphase von Wasser-basierten O/W-Emulsions-Bohrspülungen für eine umweltschonende Erschließung geologischer Formationen, die gewünschtenfalls unlösliche, feinteilige Beschwerungsmittel zur Ausbildung von Wasser-basierten O/W-Emulsionsbohrschlämmen und/oder weitere Zusatzstoffe wie Emulgatoren, Fluid-Loss-Additve, Netzmittel, Alkalireserven und/oder Hilfsstoffe zur Inhibierung erbohrten Gesteins erhöhter Wasserempfindlichkeit enthalten.

In einer weiteren Ausführungsform betrifft die Erfindung Wasser-basierte O/W-Emulsions-Bohrspülflüssigkeiten für die Gesteinserbohrung geologischer Formationen, die in einer homogenen wäßrigen Phase eine stabil-disperse Ölphase in Mengen von 5 bis 50 Gew.-% - Gew.-% bezogen auf die Summe der unbeschwerten Wasser- und Ölphase - zusammen mit gelösten und/oder dispergierten Hilfsstoffen für Bohrspülflüssigkeiten aus der Gesteinserbohrung geologischer Formationen (Emulgatoren, Fluid-Loss-Additive, Netzmittel, feinteilige Beschwerungsstoffe, Salze, Alkalireserven und/oder Desinfektionsmittel.) enthalten und dadurch gekennzeichnet sind, daß der überwiegende Anteil der dispersen Ölphase durch wasseremulgierbare, bei Arbeitstemperatur flüssige oder wenigstens plastisch verformbare und Flammpunkte von wenigstens 80 °C aufweisende Esteröle aus Monocarbonsäuren mit bis zu 5 C-Atomen und einwertigen Alkoholen mit wenigstens 6 C-Atomen und/oder mehrwertigen Alkoholen gebildet ist, wobei im Falle der Ester einwertiger Alkohole sich die Carbonsäurereste auch von Monocarbonsäuren mit bis zu 36 C-Atomen ableiten können.

Für beide Ausführungsformen der erfindungsgemäßen Lehre gilt die zusätzliche bevorzugte Maßnahme, daß überwiegend solche anorganischen und/oder organischen Hilfs- und Zuschlagsstoffe für Wasser-basierte Emulsions-Bohrspülungen bzw. Emulsions-Bohrschlämme mitverwendet werden, die ökologisch und toxikologisch unbedenklich sind. So wird also in den wichtigsten Ausführungsformen der Erfindung beispielsweise auf den Einsatz von Hilfsmitteln auf Basis löslicher toxischer Schwermetallverbindungen verzichtet.

## Die bevorzugten Ausführungsformen der Erfindung

Die Mischungsverhältnisse der Esteröl-/Wasser-Phasen überstreichen den üblichen Bereich für bisher bekannte O/W-Emulsionsbohrspülungen auf Mineralöl-Basis. Die unteren Grenzwerte für die Ölphase liegen üblicherweise bei wenigstens 5 Gew.-% oder bevorzugt zwischen 5 und 10 Gew.-%, beispielsweise also bei 7 oder 8 Gew.-%, - Gew.-% jeweils bezogen auf das Gesamtgewicht der Flüssigphasen Esteröl + Wasser jeweils im unbeschwerten Zustand. Mindestmengen in der angegebenen Größenordnung stellen sicher, daß von den Typ-charakteristischen Eigenarten einer O/W-Emulsionsspülung Gebrauch gemacht werden kann. Der obere Grenzwert für den Gehalt an Esteröl liegt üblicherweise bei 50 Gew.-% oder auch noch geringfügig darüber, beispielsweise bei maximal 65 Gew.-%. Unter der Annahme einer hinreichend gleichmäßigen Tröpfchengröße der dispersen Ölphase ist damit dann allerdings schon der Bereich der dichtesten Packung erreicht, so daß der Übergang in den Spülungstyp der W/O-Invertspülungen naheliegt bzw. sinnvoll erscheint.

Die Obergrenze des Esterölgehalts in den erfindungsgemäßen O/W-Spülungen wird im allgemeinen durch Kosten-/Nutzenüberlegungen bestimmt werden und liegt beispielsweise bei 45 Gew.-%, vorzugsweise darunter, z. B. bei 40 Gew.-%.

Eine Esterölmenge im Bereich von 10 bis 40 Gew.-% - Gew.-% wie zuvor berechnet - und insbesondere Mengen des Esteröls im Bereich von 15 bis 35 Gew.-% ergibt die Möglichkeit, zahlreiche - bekannte und bisher nicht beschriebene - Vorteile solcher Emulsionsspülungen zu verwerten. Ölgehalte von beispielsweise 20 oder äußerstenfalls 30 Gew.-% schaffen die Basis für hochwertige Bohrspülflüssigkeiten, die in ihrer Funktion den Öl-basierten Invert-Spülungen zumindest sehr nahe kommen, gleichwohl aber sehr viel weniger an Esterölphase benötigen.

## Die Definition der erfindungsgemäß eingesetzten Esteröle

Für die Auswahl und Anpassung der Esteröle an den jeweiligen Einsatzzweck gelten zunächst die folgenden allgemeinen Überlegungen:

Die Esteröle sollten bei Umgebungstemperatur, aber auch unter Einsatzbedingungen fließfähig sein, wobei der Bereich der Fließfähigkeit allerdings auch solche Materialien umfaßt, die bei Umgebungstemperatur wenigstens plastisch verformbar sind und bei den üblicherweise erhöhten Arbeitstemperaturen fließfähig erweichen. Aus Gründen der erleichterten Verarbeitbarkeit in der Praxis werden Esteröle bevorzugt, deren Erstarrungswerte (Fließ- und Stockpunkt) unterhalb 10 °C und zweckmäßigerweise unterhalb 0 °C liegen. Besonders geeignet können entsprechende Esteröle mit Erstarrungswerten nicht über -5 °C sein. Zu berücksichtigen ist hier die Tatsache, daß die Bohrspülungen üblicherweise vor Ort unter Einsatz von beispielsweise Seewasser bei vergleichsweise niedrigen Wassertemperaturen hergestellt werden.

Aus Gründen der Betriebssicherheit ist zu fordern, daß die Esteröle Flammpunkte von wenigstens 80 °C besitzen, bevorzugt werden allerdings höher liegende Flammpunkte von wenigstens 100 °C und substantiell darüberliegende Werte, beispielsweise solche oberhalb 150 oder 160 °C.

Wichtig ist für die optimale Nutzung der erfindungsgemäßen Zielsetzung weiterhin die Forderung, daß die Esteröle eine biologisch bzw. ökologisch verträgliche Konstitution aufweisen, d.h. insbesondere frei sind von unerwünscht toxischen Bestandteilen. In der bevorzugten Ausführungsform der Erfindung werden dementsprechend Esteröle eingesetzt, die frei sind von aromatischen Bestandteilen und insbesondere gesättigte und/oder olefinisch ungesättigte, geradkettige und/oder verzweigte Kohlenwasserstoffketten aufweisen. Die Verwendung von cycloaliphatische Strukturbestandteile enthaltenden Komponenten ist aus ökologischen Überlegungen heraus möglich, wird allerdings aus Kostengründen in der Praxis geringere Bedeutung haben.

Carbonsäureester der hier betroffenen Art unterliegen als hochdisperse Ölphase in einer geschlossenen wäßrigen Phase in beschränktem Ausmaß der hydrolytischen Esterspaltung unter Freisetzung der Esterbildenden Bestandteile Carbonsäure und Alkohol. Für die Gebrauchseigenschaften der Esteröle im erfindungsgemäßen Sinne sind hier zwei Gesichtspunkte zu berücksichtigen, die in einem beschränkten inneren Sachzusammenhang stehen, nämlich Überlegungen zur möglichen Inhalationstoxizität freigesetzter Komponenten, insbesondere der Alkoholkomponenten sowie die Veränderung in der Zusammensetzung der Emulsionsspülung und damit verbundene mögliche Veränderung ihrer Gebrauchseigenschaften.

Zum Verständnis der erfindungsgemäßen Lehre sollen diese Überlegungen getrennt für die Esterbildenden Grundbestandteile - einerseits die Alkohole und andererseits die Carbonsäuren - betrachtet werden.

Als Ester-bildende Alkoholkomponenten eignen sich erfindungsgemäß sowohl einwertige Alkohole als auch mehrwertige Alkohole, wobei auch beliebige Mischungen dieser Typen eingesetzt werden können. Eine weitere Unterscheidung der Alkohole ergibt sich aus der Betrachtung ihres Löslichkeitsverhaltens in Wasser. Die Alkohole können wasserlöslich und/oder wasserunlöslich sein.

In einer ersten Gruppe sind die mehrwertigen Alkohole zu betrachten. Bevorzugt sind hier insbesondere die technisch leicht zugänglichen und Ester geeigneter Rheologie bildenden niederen, mehrfunktionellen Alkohole mit 2 bis 5, vorzugsweise 2 bis 4 Hydroxylgruppen und insbesondere 2 bis 6 C-Atomen.

Charakteristische Vertreter sind das Ethylenglycol, die Propandiole und insbesondere das Glycerin.

Mehrwertige Alkohole der hier betroffenen Art zeichnen sich durch hohe Wasserlöslichkeit und dabei durch so niedere Verdunstungswerte aus, daß Überlegungen zum Ausschluß inhalations-toxischer Gefährdungen üblicherweise ausscheiden.

Mehrwertige niedere Alkohole der hier betroffenen Art können als vollveresterte Ölkomponenten und/oder als Partialester mit anteilsweise freien Hydroxylgruppen zum Einsatz kommen und/oder im praktischen Gebrauch der erfindungsgemäßen Emulsionsspülung gebildet werden. Solange entstehende Partialester den weitgehend wasserunlöslichen Charakter der Ölphase beibehalten, findet bezüglich des Öl/Wasser-Verhältnisses in der Emulsionsspülung keine substantielle Änderung statt. Anders wird es erst dann, wenn der Zustand wasserlöslicher Hydrolyseprodukte - insbesondere also der freien niederen mehrwertigen Alkohole - erreicht wird. Die im praktischen Betrieb auftretenden Veränderungen solcher Emulsionsspülungen aus dieser Quelle sind allerdings unbedeutend. Zunächst einmal ist unter den erfindungsgemäßen Arbeitsbedingungen eine vergleichsweise hohe Stabilität der Esterbindung sichergestellt. O/W-Emulsionsspülungen arbeiten bekanntlich üblicherweise im pH-Bereich von neutral bis mäßig alkalisch, beispielsweise im pH-Bereich von 7,2 bis 11 und insbesondere 7,5 bis 10,5, so daß schon aus diesen Überlegungen ein aggressiver hydrolytischer Angriff auf die Esterbindung nicht besteht. Zusätzlich und darüber hinaus gilt vor allem ja aber auch das folgende:

Im praktischen Gebrauch der Bohrspülung und dem damit verbundenen Vorantreiben der Bohrung in immer tiefere Erdschichten findet ein ständiger Verbrauch der Bohrspülung und insbesondere auch der in der Bohrspülung eingesetzten Ölphase statt. Emulsionsspülungen sind dafür bekannt, und hier liegt ein wichtiger Wert für ihren Einsatz, daß die emulgierte Ölphase auf Feststoffoberflächen aufzieht und damit sowohl die Abdichtung der Filterschicht auf der Wandung des Bohrschachtes bewirkt als auch die Interaktion zwischen dem erbohrten Gestein und der wäßrigen Phase der Bohrspülung hindert oder gar unterbindet. Dieser fortlaufende Verbrauch an Bohrspülung und insbesondere auch gerade an Ölphase fordert den fortlaufenden Nachschub an Ölspülung. Im praktischen Betrieb stellt sich damit rasch ein Gleichgewichtszustand im Rahmen der Bohrspülung ein, der den kontinuierlichen Betrieb über lange Zeiträume beherrrscht und ermöglicht.

In einigen Gesichtspunkten weiterführende Überlegungen sind bei der Mitverwendung von einwertigen Alkoholen in den Esterölen anzustellen. Hier sind nur die niederen Glieder dieser Alkohole nasserlöslich bzw. in unbegrenzter Menge wassermischbar. Zusätzlich spielt bei diesen Alkoholen aber auch ihre Flüchtigkeit eine nicht unbeträchtliche Rolle. Im praktischen Betrieb einer Bohrung stellen sich in der umgewälzten Bohrspülung rasch mäßig erhöhte Temperaturen ein, so daß die beim Umpumpen zur Bohrkleinentfernung freigelegten Anteile beispielsweise eine Temperatur im Bereich von 50 bis 70 °C aufweisen. Hier sind dann inhalationstoxikologische Überlegungen anzustellen. Schon $C_4$-Alkohole, beispielsweise Isobutylalkohol kann unter den Arbeitsbedingungen auf der Bohrplattform so flüchtig sein, daß eine Gefährdung der Mannschaft zu berücksichtigen sein wird. Erfindungsgemäß wird dementsprechend beim Einsatz von Esterölen unter Mitverwendung einwertiger Alkohole als untere Kohlenstoffgrenze die Zahl 6 gewählt. Hierbei ist das Arbeiten mit Estern von monofunktionellen praktisch wasserunlöslichen Alkoholen natürlichen und/oder synthetischen Ursprungs mit oleophilem Charakter und mit wenigstens 8 C-Atomen besonders bevorzugt.

Die Auswahl und Einschränkung der Kohlenstoffzahl im Ester-bildenden Alkohol führt dann allerdings gleichzeitig bezüglich der Zusammensetzung der Esterölphase unter Berücksichtigung einer partiellen Hydrolyse im Betrieb zum folgenden Ergebnis: Die hydrolysierenden Anteile solcher Esteröle wandeln sich zum freien Alkohol um, der als praktisch wasserunlöslicher Mischungsbestandteil in der dispersen Esterölphase verbleibt. Hier können ganz besondere Vorteile für die Funktionsfähigkeit der dispersen Ölphase ausgelöst werden. Ölbasierte Invert-Bohrspülsysteme auf Basis von fließfähigen, insbesondere monofunktionellen Alkoholen mit hoher ökologischer Verträglichkeit sind in der älteren Anmelduna der Anmelderin DE-A-39 11 238 beschrieben. Die Verwendung dieser Alkohole als Einsatzmaterial für O/W-Emulsionsspülungen der mit der vorliegenden Erfindung vergleichbaren Art sind Gegenstand einer parallelen Anmeldung der Anmelderin. Insoweit verbindet sich die Lehre der vorliegenden Erfindung mit der der Parallel-Anmeldung, so daß hier nicht weiter darauf eingegangen werden braucht.

Grundsätzlich gilt allerdings auch hier die zuvor dargestellte Überlegung, daß im praktischen Betrieb sich rasch durch Gleichgewichtseinstellung ein quasi statischer Zustand in der Zusammensetzung der Esterölphase einstellt, der durch überwiegende Gehalte an nicht-hydrolisiertem Esteröl gekennzeichnet ist.

Auch zu den durch Partialhydrolyse der Esterölspülung gebildeten Carbonsäuren bedarf es einer Reihe von Überlegungen.

Hier können in Abhängigkeit von der speziellen Konstitution der eingesetzten Carbonsäuren zwei grundsätzliche Typen - mit fließendem Übergang - unterschieden werden: Carbonsäuren, die zu Carbonsäuresalzen mit Emulgatorwirkung führen sowie Inertsalze.

Entscheidend ist hier insbesondere die jeweilige Kettenlänge des freiwerdenden Carbonsäuremoleküls. Zu berücksichtigen ist weiterhin das gewöhnlich über die Alkalireserve der Bohrspülung vorliegende salzbildende Kation.

Allgemein gelten hier die folgenden Regeln: Niedere Carbonsäuren, beispielsweise solche mit 1 bis 5 C-Atomen führen zu der Bildung von Inertsalzen, beispielsweise zur Bildung entsprechender Acetate oder Propionate. Fettsäuren höherer Kettenlänge und insbesondere solche des Bereichs von $C_{12-24}$ führen zu Verbindungen mit Emulgator-Wirkung.

Durch geeignete Wahl der Esteröle - und in gewissem Ausmaß auch der salzbildenden Kationen in der Emulsionsspülung - wird damit die gezielte Steuerung der Sekundärprodukte in der Esterspülung möglich, die wesentlichen Einfluß auf die Beschaffenheit und die Wirkung der Emulsionsspülung haben können. Auch hier gilt allerdings wiederum das Vorhergesagte: Nicht nur die disperse organische Phase, auch die wäßrige Phase unterliegt im praktischen Betrieb dem fortlaufenden Verbrauch und der Notwendigkeit des Ersatzes. Im stationären Betrieb werden sich also auch bezüglich der hier diskutierten Reaktionsfolgeprodukte auf Basis der Ester-bildenden Carbonsäuren rasch kontrollierbare Gleichgewichtszustände einstellen.

## Allgemeine Angaben zur Definition geeigneter Esteröle

Bevorzugt sind im erfindungsgemäßen Sinne als Esteröle die entsprechenden Umsetzungsprodukte von Monocarbonsäuren mit monofunktionellen und/oder polyfunktionellen Alkoholen der angegebenen Art. Die Mitverwendung von mehrwertigen Carbonsäuren ist allerdings nicht ausgeschlossen, insbesondere aus Kostengründen kommt ihnen aber untergeordnete Bedeutung zu.

Die Carbonsäuren können dabei natürlichen und/oder synthetischen Ursprungs sein, sie sind wie bereits angegeben, bevorzugt geradkettig und/oder verzweigt und gegebenenfalls cyclisch, dabei aber nicht aromatisch ausgebildet. Die Ester-bildenden Carbonsäuren können gesättigt und/oder ungesättigt sein, wobei unter ungesättigten Verbindungen hier insbesondere olefinisch ungesättigte Verbindungen zu verstehen sind, die einfach, aber auch mehrfach olefinisch ungesättigt sein können. Olefinisch ungesättigten Komponenten kann zur Einstellung vorgegebener Rheologiewerte besondere Bedeutung zukommen. Bekanntlich sind olefinische längerkettige Verbindungen zur Bildung von Estern niedrigeren Schmelzpunktes geeignet als entsprechende gesättigte Komponenten.

Der bevorzugte Bereich für die Kohlenstoffzahl der Carbonsäuren reicht von 1 bis 36 und insbesondere von 2 bis 36. Aus Gründen der leichten Zugänglichkeit kann eine obere Grenze der Kohlenstoffzahl bei 22 bis 24 liegen. Die Auswahl der jeweiligen Kettenlänge in der Ester-bildenden Carbonsäurekomponente erfolgt - in Abstimmung mit der Natur der eingesetzten Alkoholkomponente(n) - unter Berücksichtigung der zahlreichen Überlegungen, auf die bereits eingegangen wurde und nicht etwa nur den Ester und/oder seine Rheologie unmittelbar sondern auch die insbesondere durch partielle Hydrolyse gebildeten Reaktionsfolgeprodukte betreffen.

Geeignete Alkohole sind wie angegeben sowohl monofunktionelle Alkohole - unter Berücksichtigung der aufgezählten Einschränkungen - als auch polyfunktionelle Alkohole, insbesondere niedere polyfunktionelle Alkohole mit 2 bis 6 C-Atomen und mit bevorzugt maximal 4 Hydroxylgruppen.

Auch die Alkoholkomponenten können dabei natürlichen und/oder synthetischen Ursprungs sein, sie sind geradkettig oder verzweigt und insbesondere im Fall der monofunktionellen Alkohole gesättigt und/oder auch olefinisch ungesättigt. Monofunktionelle Alkohole besitzen insbesondere bis zu 36 C-Atomen, vorzugsweise bis zu 24 C-Atome. Alkoholen mit 6 bis 18, insbesondere 7. bis 15 C-Atomen natürlichen und/oder synthetischen Ursprungs kann nur Ausbildung der Esterölphase besondere Bedeutung zukommen.

Besonders wichtige Esteröle sind im Sinne des erfindungsgemäßen Handelns umweltverträgliche Esteröle wie sie insbesondere in den genannten älteren Anmeldungen DE-A-38 42 659, 38 42 703, 39 07 391 und 39 07 392 geschildert sind. Zur Vervollständigung der Erfindungsoffenbarung werden im nachfolgenden wesentliche Kenndaten solcher Esteröle bzw. Estergemische kurz zusammengefaßt.

Die disperse Esterölphase enthält dementsprechend Carbonsäureester aus wenigstens einer der nachfolgenden Unterklassen:

a) Ester aus $C_{1-5}$-Monocarbonsäuren und ein- und/oder mehrfunktionellen Alkoholen, wobei Reste aus einwertigen Alkoholen wenigstens 6, bevorzugt wenigstens 8 C-Atome aufweisen und die mehrwertigen Alkohole bevorzugt 2 bis 6 C-Atome im Molekül besitzen,

b) Ester aus Monocarbonsäuren synthetischen und/oder natürlichen Ursprungs mit 6 bis 16 C-Atomen, insbesondere Ester entsprechender aliphatisch gesättigter Monocarbonsäuren und einfunktionellen Alkoholen der unter a) genannten Art,

c) Ester olefinisch ein- und/oder mehrfach ungesättiger Monocarbonsäuren mit wenigstens 16, insbesondere 16 bis 24 C-Atomen und monofunktionellen geradkettigen und/oder verzweigten Alkoholen, der unter al gennanter Art.

Die zuletzt genannten Ester olefinisch ein- und/oder mehrfach ungesättigter Monocarbonsäuren mit wenigstens 16 C-Atomen (c) sind bevorzugt wenigstens einer der nachfolgenden Unterklassen zuzuordnen:

c1) Ester, die sich zu mehr als 45 Gew.-%, vorzugsweise zu mehr als 55 Gew.-%, von zwei- und/oder mehrfach olefinisch ungesättigten $C_{16-24}$-Monocarbonsäuren ableiten,

c2) Ester, die sich zu nicht mehr als 35 Gew.-% von zwei- und mehrfach olefinisch ungesättigen Säuren ableiten und dabei bevorzugt zu wenigstens 60 Gew.-% einfach olefinisch ungesättigt sind.

Ausgangsmaterialien für die Gewinnung zahlreicher in diese Unterklassen fallenden Monocarbonsäuren, insbesondere höherer Kohlenstoffzahl, sind pflanzliche und/oder tierische Öle. Genannt seien Kokosöl, Palmkernöl und/oder Babassuöl, insbesondere als Einsatzmaterialien für die Gewinnung von Monocarbonsäuren des überwiegenden Bereichs bis $C_{18}$ und von im wesentlichen gesättigten Komponenten. Pflanzliche Esteröle, insbesondere für olefinisch ein- und gegebenenfalls mehrfach ungesättigte Carbonsäuren des Bereichs von $C_{16-24}$ sind beispielsweise Palmöl, Erdnußöl, Rizinusöl und insbesondere Rüböl. Carbonsäuren tierischen Ursprungs dieser Art sind insbesondere entsprechende Gemische aus Fischölen wie Heringsöl.

Dabei ist allerdings das Folgende zu berücksichtigen: Natürliche Öle und Fette fallen üblicherweise in einer beispielsweise mit freien Carbonsäuren oder sonstigen Begleitstoffen so stark verunreinigten Form an, daß ihre unmittelbare Verarbeitung in O/W-Emulsionsspülungen der hier betroffenen Art ausscheidet. Werden solche natürlichen Einsatzmaterialien in der handelsüblichen Form Wasser-basierten Bohrspülungen zugesetzt, so tritt nahezu schlagartig ein so starkes Schäumen der in Betrieb befindlichen Bohrspülung auf, daß eine ernsthafte Behinderung bis zur Unbrauchbarkeit der Bohrspülung das Ergebnis ist. Grundsätzlich muß immer bei solchen Estern höherwertiger Alkohole mit einer nicht unbeträchtlichen Schaumbildungstendenz gerechnet werden. Partialester des Glycerins - die Mono- oder Diglyceride - sind bekanntlich wirkungsvolle Emulgatorkomponenten.

Wie bereits angegeben, eignen sich für die erfindungsgemäßen Zwecke nicht nur vergleichsweise dünnflüssige Esteröle im Sinne der Offenbarung der genannten älteren Anmeldungen der Anmelderin auf dem Gebiet der Invert-Bohrspülungen auf Esteröl-Basis, im Rahmen der O/W-Emulsionsspülungen können insbesondere vergleichsweise zähflüssige Esteröle als disperse Phase von Vorteil sein. Sie sind beispielsweise wertvolle Hilfsmittel zum Verschluß feinster Poren im Filterkuchen des Bohrschachtes oder aber bei der Inertisierung quellfähigen Gesteins, die Schmierfähigkeit derartiger Esteröle vergleichsweise erhöhter Viskosität auch bei erhöhten Temperaturen im Bohrschacht, insbesondere gerade auch bei abgelenkten Bohrungen ist gegebenenfalls deutlich besser als die vergleichsweise dünnflüssiger Esteröle. Eine Beeinträchtigung der Bohrtechnologie wird durch eine disperse Esterölphase aus vergleichsweise höherviskosen Esterölen nicht ausgelöst, die Rheologie des Gesamtsystems wird durch die geschlossene wäßrige Phase bestimmt. Es kann in diesem Sinne bevorzugt sein, Esteröle als disperse Phase einzusetzten, die eine Brookfield-Viskosität bis 500 000 mPas oder auch darüber, beispielsweise bis 1 Mio. oder auch 2 Mio. mPas besitzen (bestimmt bei Raumtemperatur). Hier liegt eine wichtige Erweiterung gegen die Lehre der genannten älteren Anmeldungen der Anmelderin auf dem Gebiet der Öl-basierten Invert-Bohrspülungen auf Esteröl-Basis.

In einer Ausführungsform der Erfindung kann verzweigtkettigen Komponenten und insbesondere α-verzweigtkettigen Alkoholen und/oder Carbonsäuren besondere Bedeutung zukommen. Verzweigungen dieser Art ist bekanntliche einerseits eine Beeinflussung der Rheologie zueigen, üblicherweise wird der gebildete Ester durch eine solche Kettenverzweigung beweglicher. Darüber hinaus kann sich eine solche α-Verzweigung aber auch in Richtung auf eine erhöhte Hydrolysestabilität unter Arbeitsbedingungen auswirken, von der damit erfindungsgemäß Gebrauch gemacht wird.

## Die wäßrige Phase

Alle Wassertypen sind zur Herstellung erfindungsgemäßer O/W-Emulsionsspülungen geeignet. Diese können dementsprechend auf Basis Süßwasser als insbesondere auch auf Basis Salzwasser - hier insbesondere Halogenide und/oder Carbonate der Alkali- und/oder Erdalkalimetalle enthaltendes Wasser und insbesondere Seewasser bei Off-Shore-Bohrungen - aufgebaut sein.

Additive in der Emulsionsspülung

Grundsätzlich kommen hier alle für vergleichbare Spülungstypen vorgesehene Additve in Betracht, deren Zusatz in üblicher Weise mit einem ganz bestimmt angestrebten Eingenschaftsbild der Bohrspülung verbunden ist. Die Additive können wasserlöslich, öllöslich und/oder Wasser- bzw. Öl-dispergierbar sein.

Klassische Additive wasserbasierter O/W-Emulsionsspülungen können sein: Emulgatoren, Fluid-Loss-Additive, Strukturviskosität aufbauende lösliche und/oder unlösliche Stoffe, Alkalireserven, Mittel zur Inhibierung des unerwünschten Wasseraustausches zwischen erbohrten Formationen - z. B. Wasser-quellbare Tone und/oder Salzschichten - und der Wasser-basierten Spülflüssigkeit, Netzmittel zum besseren Aufziehen der emulgierten Ölphase auf Feststoffoberflächen, z.B. zur Verbesserung der Schmierwirkung, aber auch zur Verbesserung des oleophilen Verschlusses freigelegter Gesteinsformationen, bzw. Gesteinsflächen, Desinfektionsmittel, beispielsweise zur Hemmung des bakteriellen Befalls solcher O/W-Emulsionen und dergleichen. Im einzelnen ist hier auf den einschlägigen Stand der Technik zu verweisen, wie er beispielsweise in der eingangs zitierten Fachliteratur ausführlich beschrieben wird, siehe hierzu insbesondere Gray und Darley, aao., Kapitel 11, "Drilling Fluid Components". Nur auszugsweise sei dementsprechend im nachfolgenden zitiert:

Feindisperse Zusatzstoffe zur Erhöhung der Spülungsdichte: Weit verbreitet ist das Bariumsulfat (Baryt), aber auch Calciumcarbonat (Calcit) oder das Mischcarbonat von Calcium und Magnesium (Dolomit) finden Verwendung.

Mittel zum Aufbau der Strukturviskosität, die gleichzeitig auch als Fluid-Loss-Additive wirken: In erster Linie ist hier Bentonit zu nennen, der in Wasser-basierten Spülungen bekanntlich in nicht modifizierter Form eingesetzt wird und damit ökologisch unbedenklich ist. Für Salzwasserspülungen kommt anderen vergleichbaren Tonen, insbesondere Attapulgit und Sepiolith, in der Praxis beträchtliche Bedeutung zu.

Auch der Mitverwendung organischer Polymerverbindungen natürlichen und/oder synthetischen Ursprungs kann beträchtliche Bedeutung in diesem Zusammenhang zukommen. Zu nennen sind hier insbesondere Stärke oder chemisch modifizierte Stärken, Cellulosederivate, wie Carboxymethylcellulose, Guargum, Xanthangum, oder auch rein synthetische wasserlösliche und/oder wasserdispergierbare Polymerverbindungen, insbesondere von der Art der hochmolekularen Polyacrylamidverbindungen mit oder ohne anionische bzw. kationische Modifikation.

Verdünner zur Viskositätsregulierung: Die sogenannten Verdünner können organischer oder anorganischer Natur sein, Beispiele für organische Verdünner sind Tannine und/oder Qebracho-Extrakt. Weitere Beispiele hierfür sind Lignit und Lignitderivate, insbesondere Lignosulfonate. Wie zuvor allerdings angegeben, wird in einer bevorzugten Ausführungsform der Erfindung auf die Mitverwendung toxischer Komponenten gerade hier verzichtet, wobei hier in erster Linie die entsprechenden Salze mit toxischen Schwermetallen wie Chrom und/oder Kupfer zu nennen sind. Ein Beispiel für anorganische Verdünner sind Polyphosphatverbindungen.

Emulgatoren: Für die erfindungsgemäße Lehre sind hier insbesondere zwei Besonderheiten zu berücksichtigen. Es hat sich gezeigt, daß eine stabile Dispergierung von Esterölen sehr viel leichter möglich sein kann als die entsprechende Dispergierung von reinen Mineralölen wie sie nach dem Stand der Technik eingesetzt werden. Hier liegt bereits eine erste Erleichterung. Weiterhin ist zu berücksichtigen, daß durch eine Partialverseifung der Esteröle unter Mitwirkung geeigneter Alkalireserven beim Einsatz längerkettiger Carbonsäureester wirkungsvolle O/W-Emulgatoren nachgebildet werden und damit zur Stabilisierung des Systems beitragen.

Den unerwünschten Wasseraustausch mit beispielsweise Tonen inhibierende Zusatzstoffe: In Betracht kommen hier die aus dem Stand der Technik zu wasserbasierten Bohrspülungen bekannten Zusatzstoffe. Insbesondere handelt es sich dabei um Halogenide und/oder Carbonate der Alkali- und/oder Erdalkalimetalle, wobei entsprechenden Kaliumsalzen gegebenenfalls in Kombination mit Kalk besondere Bedeutung zukommen kann. Verwiesen sei beispielsweise auf die entsprechenden Veröffentlichungen in "Petroleum Engineer International", September 1987, 32 - 40 und "World Oil", November 1983, 93 - 97.

Alkalireserven: In Betracht kommen hier auf das Gesamtverhalten der Spülung abgestimmte anorganische und/oder organische Basen, insbesondere entsprechende basische Salze bzw. Hydroxide von Alkali- und/oder Erdalkalimetallen sowie organische Basen.

Auf dem Gebiet der organischen Basen ist begrifflich zu unterscheiden zwischen wasserlöslichen organischen Basen - beispielsweise Verbindungen vom Typ des Diethanolamins - und praktisch wasserunlöslichen Basen oleophilen Charakters - insbesondere basischen Aminverbindungen oleophilen Charakters und beschränkter Wasserlöslichkeit, wie sie in der eingangs zitierten älteren Anmeldung der Anmelderin DE-A-39 03 785 als Additiv in Invert-Bohrspülschlämmen auf Esteröl-Basis geschildert sind. Gerade die Mitverwendung auch solcher öllöslichen Basen im Rahmen der vorliegenden Erfindung fällt in die neue Lehre. Oleophile Basen dieser Art, die sich insbesondere durch wenigstens einen Kohlenwasserstoffrest mit beispielsweise 8 bis 36 C-Atomen auszeichnen, sind dann allerdings nicht in der wäßrigen Phase sondern in der dispersen Ölphase gelöst. Hier kommt diesen basischen Komponenten mehrfache Bedeutung zu. Einerseits können sie unmittelbar als Alkalireserve wirken. Zum anderen verleihen sie dem dispergierten Öltröpfchen einen gewissen positiven Ladungszustand und führen damit zu erhöhter Interaktion mit negativen Flächenladungen wie sie insbesondere bei hydrophilen und zum Ionenaustausch befähigten Tonen anzutreffen sind. Erfindungsgemäß kann damit Einfluß auf die hydrolytische Spaltung und den oleophilen Verschluß wasserreaktiver Gesteinsschichten genommen werden.

Im Rahmen der vorliegenden Erfindung werden vorzugsweise solche oleophile Aminverbindungen mitverwendet, die von aromatischen Bestandteilen frei sind und deren Wasserlöslichkeit bei Raumtemperatur nicht mehr als 1 Gew.-% beträgt. Ferner wird bevorzugt im Sinne der Erfindung mit einer dispersen Esterölphase gearbeitet, deren Gehalt an oleophilen Aminverbindungen bis zu 10 Gew.-% beträgt und vorzugsweise im Bereich von 0,1 bis 2 Gew.-% - jeweils bezogen auf Esteröl - liegt.

Die Menge der jeweils eingesetzten Hilfs- und Zusatzstoffe bewegt sich grundsätzlich im üblichen Rahmen und kann damit der zitierten einschlägigen Literatur entnommen werden.

Beispiele

Zunächst wird unter Einsatz von handelsüblichem Bentonit (nicht hydrophobiert) mit Leitungswasser unter Einstellung eines pH-Wertes von 9,2 bis 9,3 mittels Natronlauge eine 6 Gew.-%ige homogenisierte Bentonitaufschlämmung hergestellt.

Ausgehend von dieser vorgequollenen wäßrigen Bentonit-Phase werden in aufeinanderfolgenden Verfahrensschritten - jeweils unter intensiver Durchmischung - die einzelnen Komponenten der Wasser-basierten Esteröl-Emulsion gemäß der nachfolgenden Rezeptur eingearbeitet:

| | |
|---|---|
| 350 g | 6 Gew.-%ige Bentonitlösung |
| 1,5 g | technische Carboxymethylcellulose niedrigviskos (Relatin U 300 S9) |
| 35 g | Natriumchlorid |
| 70 g | Esteröl (gemäß der im nachfolgenden gegebenen Definition) |
| 1,7 g | Emulgator (sulf. Ricinusöl "Türkischrot-Öl", soweit nicht anders angegeben) |
| 219 g | Baryt |

An den so hergestellten O/W-Emulsionsspülungen werden Viskositätsbestimmungen wie folgt durchgeführt:

Zunächst wird an der Emulsionsspülung bei 50 °C am ungealterten Material die plastische Viskosität (PV), die Fließgrenze (YP) sowie die Gelstärke nach 10 sec und nach 10 min bestimmt.

Anschließend wird die Emulsionsspülung 16 h bei 125 °C im Autoklaven im sogenannten "Rollet-Oven" gealtert, um den Temperatureinfluß auf die Emulsionsstabilität zu überprüfen. Danach werden erneut die Viskositätswerte bei 50 °C bestimmt. In den nachfolgenden Beispielen sind jeweils die Natur des eingesetzten Esteröls, Angaben zum Emulgator, die am ungealterten und am gealterten Material bestimmten Werte und - falls erforderlich - allgemeine Bemerkungen zusammengefaßt.

Beispiel 1

Eingesetztes Esteröl: 2-Ethylhexylester eines $C_{8-14}$-Fettsäuregemisches (im wesentlichen gesättigt). Türkischrot-Öl als Emulgator.

|  | ungealtertes Material | gealtertes Material |
|---|---|---|
| Plastische Viskosität [mPa·s] | 8 | 14 |
| Fließgrenze [Pa] | 19,2 | 13,4 |
| Gelstärke [Pa] |  |  |
| 10 sec | 13,4 | 9,6 |
| 10 min | 16,3 | 23,0 |

Beispiel 2

Der Ansatz des Beispiels 1 wird wiederholt, jedoch wird auf die Mitverwendung des Emulgators (Türkischrot-Öl) verzichtet.

Die am ungealterten und gealterten Material gemessenen Viskositätswerte sind die folgenden:

|  | ungealtertes Material | gealtertes Material |
|---|---|---|
| Plastische Viskosität [mPa·s] | 11 | 10 |
| Fließgrenze [Pa] | 16,8 | 18,2 |
| Gelstärke [Pa] |  |  |
| 10 sec | 18,2 | 16,3 |
| 10 min | 35,9 | 24,0 |

Schon im Frischansatz ist eine leichte Tröpfchenbildung an der Oberfläche festzustellen, nach der Alterung tendiert die Festsubstanz zum Absetzen.

Beispiel 3

Unter Einsatz von Türkischrot-Öl als Emulgator wird der mit n-Hexanol veresterte Rückstand aus der Fettsäuredimerisierung (Monomerfettsäure "Aliphat 47") als Esterölphase eingearbeitet. Die am ungealterten und gealterten Material bestimmten Viskositätswerte sind die folgenden:

EP 0 398 113 B1

|  | ungealtertes Material | gealtertes Material |
|---|---|---|
| Plastische Viskosität [mPa·s] | 14 | 16 |
| Fließgrenze [Pa] | 17,2 | 14,4 |
| Gelstärke [Pa] | | |
| 10 sec | 12,0 | 9,1 |
| 10 min | 12,9 | 22,5 |

**Patentansprüche**

1. Verwendung von Wasser-emulgierbaren, bei Arbeitstemperatur flüssigen oder wenigstens plastisch verformbaren und Flammpunkte von wenigstens 80 °C aufweisenden Estern aus Monocarbonsäuren mit bis zu 5 C-Atomen und einwertigen Alkoholen mit wenigstens 6 C-Atomen und/oder mehrwertigen Alkoholen, wobei im Falle der Ester einwertiger Alkohole sich die Carbonsäurereste auch von Monocarbonsäuren mit bis zu 36 C-Atomen ableiten können, als überwiegender Bestandteil der dispersen Ölphase von Wasser-basierten O/W-Emulsions-Bohrspülungen für eine umweltschonende Erschließung geologischer Formationen, die gewünschtenfalls unlösliche, feinteilige Beschwerungsmittel zur Ausbildung von Wasser-basierten O/W-Emulsionsbohrschlämmen und/oder weitere Zusatzstoffe wie Emulgatoren, Fluid-Loss-Additive, Netzmittel, Alkalireserven und/oder Hilfsstoffe zur Inhibierung erbohrten Gesteins erhöhter Wasserempfindlichkeit enthalten.

2. Ausführungsform nach Anspruch 1, dadurch gekennzeichnet, daß die disperse Esterölphase in Mengen von wenigstens 5 Gew.-%, vorzugsweise von wenigstens 8 Gew.-% in der O/W-Spülung eingesetzt wird - Gew.-% bezogen auf die Summe der unbeschwerten Flüssiganteile Esteröl/Wasser - und dabei vorzugsweise nicht mehr als 50 Gew.%, insbesondere nicht mehr als 40 Gew.-% - Gew.-% wie zuvor berechnet - ausmacht.

3. Ausführungsform nach Ansprüchen 1 und 2, dadurch gekennzeichnet, daß Ester von monofunktionellen Alkoholen natürlichen und/oder synthetischen Ursprungs und oleophilem Charakter mit wenigstens 8 C-Atomen verwendet werden.

4. Ausführungsform nach Ansprüchen 1 bis 3, dadurch gekennzeichnet, daß bei Verwendung oder Mitverwendung von Esterölen auf Basis mehrfunktioneller Alkohole auch Voll- und/oder Partialester wasserlöslicher Polyole mit bevorzugt bis zu 4 OH-Gruppen im Molekül, insbesondere Ester von Ethylenglycol, Propylenglycol und/oder Glycerin, zum Einsatz kommen.

5. Ausführungsform nach Ansprüchen 1 bis 4, dadurch gekennzeichnet, daß Esteröle eingesetzt werden, die Erstarrungswerte (Fließ- und Stockpunkt) unterhalb 0 °C, vorzugsweise unterhalb -5 °C, dabei Flammpunkte von wenigstens 100 °C aufweisen.

6. Ausführungsform nach Ansprüchen 1 bis 5, dadurch gekennzeichnet, daß als disperse Ölphase Esteröle verwendet werden, die als geschlossene Ölphase bei 20 °C eine Brookfield-RVT-Viskosität nicht über 1 Mio. mPas aufweisen.

7. Ausführungsform nach Ansprüchen 1 bis 6, dadurch gekennzeichnet, daß Esteröle verwendet werden, die frei sind von toxikologisch bedenklichen Molekülbestandteilen, insbesondere aromatischen Anteilen, wobei sich die bevorzugten Esteröle von geradkettigen und/oder verzweigten Carbonsäuren und vorzugsweise auch entsprechenden Alkoholen ableiten.

12

**8.** Ausführungsform nach Ansprüchen 1 bis 7, dadurch gekennzeichnet, daß die disperse Esterölphase Carbonsäureester aus wenigstens einer der nachfolgenden Unterklassen enthält:

a) Ester aus $C_{1-5}$-Monocarbonsäuren und ein- und/oder mehrfunktionellen Alkoholen, wobei Reste aus einwertigen Alkoholen wenigstens 6, bevorzugt wenigstens 8 C-Atome aufweisen und die mehrwertigen Alkohole bevorzugt 2 bis 6 C-Atome im Molekül besitzen,

b) Ester aus Monocarbonsäuren synthetischen und/oder natürlichen Ursprungs mit 6 bis 16 C-Atomen, insbesondere Ester entsprechender aliphatisch gesättigter Monocarbonsäuren und einfunktionellen Alkoholen der unter a) genannten Art,

c) Ester olefinisch ein- und/oder mehrfach ungesättiger Monocarbonsäuren mit wenigstens 16, insbesondere 16 bis 24 C-Atomen und monofunktionellen geradkettigen und/oder verzweigten Alkoholen der unter a) genannten Art.

**9.** Ausführungsform nach Ansprüchen 1 bis 8, dadurch gekennzeichnet, daß in der dispersen Phase vorliegende Esteröle gemäß Anspruch 8, c) wenigstens einer der nachfolgenden Unterklassen zuzuordnen sind:

c1) Ester, die sich zu mehr als 45 Gew.-%, vorzugsweise zu mehr als 55 Gew.-%, von zwei- und/oder mehrfach olefinisch ungesättigten $C_{16-24}$-Monocarbonsäuren ableiten,

c2) Ester, die sich zu nicht mehr als 35 Gew.-% von zwei- und mehrfach olefinisch ungesättigen Säuren ableiten und dabei bevorzugt zu wenigstens 60 Gew.-% einfach olefinisch ungesättigt sind.

**10.** Ausführungsform nach Ansprüchen 1 bis 9, dadurch gekennzeichnet, daß in der dispersen Ölphase basische Aminverbindungen oleophilen Charakters und beschränkter Wasserlöslichkeit als Additiv mitverwendet werden.

**11.** Ausführungsform nach Ansprüchen 1 bis 10, dadurch gekennzeichnet, daß oleophile Aminverbindungen mitverwendet werden, die von aromatischen Bestandteilen frei sind und deren Wasserlöslichkeit bei Raumtempertur nicht mehr als 1 Gew.-% beträgt.

**12.** Ausführungsform nach Ansprüchen 1 bis 11, dadurch gekennzeichnet, daß mit basischen Aminverbindungen als Zusatz gearbeitet wird, die wenigstens einen Kohlenwasserstoffrest mit bevorzugt 8 bis 36 C-Atomen aufweisen.

**13.** Ausführungsform nach Ansprüchen 1 bis 12, dadurch gekennzeichnet, daß mit einer dispersen Esterölphase gearbeitet wird, deren Gehalt an oleophilen Aminverbindungen bis zu 10 Gew.-% beträgt und vorzugsweise im Bereich von 0,1 bis 2 Gew.-% - jeweils bezogen auf Esteröl - liegt.

**14.** Ausführungsform nach Ansprüchen 1 bis 13, dadurch gekennzeichnet, daß mit Esterölen erhöhter Verseifungsstabilität gearbeitet wird, die insbesondere wenigstens eine verzweigte Ester-bildende Komponente, vorzugsweise in Form einer $\alpha$-Verzweigung aufweisen.

**15.** Ausführungsform nach Ansprüchen 1 bis 14, dadurch gekennzeichnet, daß als homogene wäßrige Phase Süßwasser oder gelöste bzw. suspendierte Salze, insbesondere Halogenide und/oder Carbonate der Alkali- und/oder Erdalkalimetalle enthaltendes Wasser eingesetzt wird, das auch gewünschtenfalls modifiziertes Seewasser sein kann.

**16.** Ausführungsform nach Ansprüchen 1 bis 15, dadurch gekennzeichnet, daß die dispergierten Esteröle zusammen mit bekannten anorganischen und/oder organischen Hilfsstoffen zur Einschränkung der Gesteinshydratation hierzu disponierter mineralischer Schichten verwendet werden.

**17.** Wasserbasierte O/W-Emulsions-Bohrspülflüssigkeiten für die Gesteinserbohrung geologischer Formationen, die in einer homogenen wäßrigen Phase eine stabil-disperse Ölphase in Mengen von 5 bis 50 Gew.-% - Gew.-% bezogen auf die Summe der unbeschwerten Wasser- und Ölphase - zusammen mit gelösten und/oder dispergierten Hilfsstoffen für Bohrspülflüssigkeiten aus der Gesteinserbohrung geologischer Formationen (Emulgatoren, Fluid-Loss-Additive, Netzmittel, feinteilige Beschwerungsstoffe, Salze, Alkalireserven und/oder Desinfektionsmittel) enthalten, dadurch gekennzeichnet, daß der überwiegende Anteil der dispersen Ölphase durch wasseremulgierbare, bei Arbeitstemperatur flüssige oder wenigstens plastisch verformbare und Flammpunkte von wenigstens 80 °C aufweisende Esteröle aus Monocarbonsäuren mit bis zu 5 C-Atomen und einwertigen Alkoholen mit wenigstens 6 C-Atomen und/oder mehrwertigen Alkoholen gebildet ist, wobei im Falle der Ester einwertiger Alkohole sich die Carbonsäurereste auch von Monocarbonsäuren mit bis zu 36 C-Atomen ableiten können.

18. Emulsionsbohrspülflüssigkeiten nach Anspruch 17, dadurch gekennzeichnet, daß die disperse Esterölphase wenigstens 8 Gew.-% und vorzugsweise nicht mehr als 40 Gew.-% ausmacht, wobei Anteile der emulgierten Esterölphase im Bereich von 10 bis 35 Gew.-% bevorzugt sind.

19. Emulsionsbohrspülflüssigkeiten nach Ansprüchen 17 und 18, dadurch gekennzeichnet, daß die Ester-bildenden Alkohole und Carbonsäuren frei sind von ökologisch bedenklichen, insbesondere aromatischen Bestandteilen.

20. Emulsionsbohrspülflüssigkeiten nach Ansprüchen 17 bis 19, dadurch gekennzeichnet, daß die Esteröle einer oder mehrerer der nachfolgenden Unterklassen zuzuordnen sind:
a) Ester aus $C_{1-5}$-Monocarbonsäuren und ein- und/oder mehrfunktionellen Alkoholen, wobei Reste aus einwertigen Alkoholen wenigstens 6, bevorzugt wenigstens 8 C-Atome aufweisen und die mehrwertigen Alkohole bevorzugt 2 bis 6 C-Atome im Molekül besitzen,
b) Ester aus Monocarbonsäuren synthetischen und/oder natürlichen Ursprungs mit 6 bis 16 C-Atomen, insbesondere Ester entsprechender aliphatisch gesättigter Monocarbonsäuren und einfunktionellen Alkoholen der unter a) genannten Art,
c) Ester olefinisch ein- und/oder mehrfach ungesättiger Monocarbonsäuren mit wenigstens 16, insbesondere 16 bis 24 C-Atomen und monofunktionellen geradkettigen und/oder verzweigten Alkoholen der unter a) genannten Art.

21. Emulsionsbohrspülflüssigkeiten nach Ansprüchen 17 bis 20, dadurch gekennzeichnet, daß beim Vorliegen von Esterölen der Unterklasse c) diese wenigstens einer der nachfolgenden Unterklassen zuzuordnen sind:
c1) Ester, die sich zu mehr als 45 Gew.-%, vorzugsweise zu mehr als 55 Gew.-%, von zwei- und/oder mehrfach olefinisch ungesättigten $C_{16-24}$-Monocarbonsäuren ableiten.
c2) Ester, die sich zu nicht mehr als 35 Gew.-% von zwei- und mehrfach olefinisch ungesättigen Säuren ableiten und dabei bevorzugt zu wenigstens 60 Gew.-% einfach olefinisch ungesättigt sind.

22. Emulsionsbohrspülflüssigkeiten nach Ansprüchen 17 bis 21, dadurch gekennzeichnet, daß Esteröle auf Basis monofunktioneller, praktisch wasserunlöslicher Alkohole mit oleophilem Charakter vorliegen.

23. Emulsionsbohrspülflüssigkeiten nach Ansprüchen 17 bis 22, dadurch gekennzeichnet, daß in der dispersen Esterölphase basische Aminverbindungen oleophilen Charakters und beschränkter Wasserlöslichkeit mitverwendet werden, die von aromatischen Bestandteilen frei sind und vorzugsweise wenigstens einen Kohlenwasserstoffrest mit bevorzugt 8 bis 36 C-Atomen aufweisen.

24. Emulsionsbohrspülflüssigkeiten nach Ansprüchen 17 bis 23, dadurch gekennzeichnet, daß auch die üblichen Hilfs- und Zuschlagsstoffe Wasser-basierter Emulsions-Bohrspülflüssigkeiten frei von toxischen Schwermetallverbindungen sind.

25. Emulsionsbohrspülflüssikgeiten nach Ansprüchen 17 bis 24, dadurch gekennzeichnet, daß sie Zuschlagsstoffe zur Inhibierung der Wasseraufnahme quellfähiger Gesteinsschichten bzw. Tone enthalten.

26. Emulsionsbohrspülflüssikgeiten nach Ansprüche 17 bis 25, dadurch gekennzeichnet, daß sie auf einen pH-Wert im Bereich von 7,5 bis 11 eingestellt sind.


## Claims

1. The use of water-emulsifiable esters of monocarboxylic acids containing up to 5 carbon atoms and monohydric alcohols containing at least 6 carbon atoms and/or polyhydric alcohols, which are liquid or at least plastic at the working temperature and have flash points of at least 80°C, the carboxylic acid components of the esters of monohydric alcohols also being derivable from monocarboxylic acids containing up to 36 carbon atoms, as a predominant part of the disperse oil phase of water-based o/w emulsion drilling fluids for the ecologically safe development of geological formations which, if desired, contain insoluble fine-particle weighting agents for forming water-based o/w emulsion drilling muds and/or other additives, such as emulsifiers, fluid loss additives, wetting agents, alkali reserves and/or auxiliaries for inhibiting drilled rock highly sensitive to water.

2. The use claimed in claim 1, characterized in that the disperse ester oil phase is used in quantities of at least 5% by weight and preferably in quantities of at least 8% by weight in the o/w drilling fluid (% by weight based on the sum of the unweighted liquid components ester oil/water) and preferably makes up no more than 50% by weight and, in particular, no more than 40% by weight (% by weight on the same basis as before).

3. The use claimed in claims 1 and 2, characterized in that esters of monohydric alcohols of natural and/or synthetic origin and oleophilic character containing at least 8 carbon atoms are used.

4. The use claimed in claims 1 to 3, characterized in that, where ester oils based on polyhydric alcohols are used or co-used, full and/or partial esters of water-soluble polyols preferably containing up to 4 OH groups in the molecule, more particularly esters of ethylene glycol, propylene glycol and/or glycerol, are used.

5. The use claimed in claims 1 to 4, characterized in that ester oils having solidification values (flow point and pour point) below 0°C and preferably below -5°C for flash points of at least 100°C are used.

6. The use claimed in claims 1 to 5, characterized in that ester oils having a Brookfield RVT viscosity of not more than 1 million mPas at 20°C as a continuous oil phase are used as the disperse oil phase.

7. The use claimed in claims 1 to 6, characterized in that ester oils free from toxicologically unsafe molecule constituents, more particularly aromatic components, are used, the preferred ester oils being derived from linear and/or branched carboxylic acids and, preferably, also corresponding alcohols.

8. The use claimed in claims 1 to 7, characterized in that the disperse ester oil phase contains carboxylic acid esters from at least one of the following sub-classes:
a) esters of $C_{1-5}$ monocarboxylic acids and monohydric and/or polyhydric alcohols, residues of monohydric alcohols containing at least 6 and preferably at least 8 carbon atoms and the polyhydric alcohols preferably containing 2 to 6 carbon atoms in the molecule,
b) esters of monocarboxylic acids of synthetic and/or natural origin containing 6 to 16 carbon atoms, more particularly esters of corresponding aliphatically saturated monocarboxylic acids and monohydric alcohols of the type mentioned in a),
c) esters of olefinically mono- and/or polyunsaturated monocarboxylic acids containing at least 16 and, more particularly, 16 to 24 carbon atoms and monohydric linear and/or branched alcohols of the type mentioned in a).

9. The use claimed in claims 1 to 8, characterized in that ester oils according to claim 8, c) present in the disperse phase may be assigned to at least one of the following subclasses:
c1) esters of which more than 45% by weight and preferably more than 55% by weight are derived from di- and/or polyolefinically unsaturated $C_{16-24}$ monocarboxylic acids,
c2) esters of which no more than 35% by weight are derived from di- and polyolefinically unsaturated acids and of which preferably at least 60% by weight are monoolefinically unsaturated.

10. The use claimed in claims 1 to 9, characterized in that basic amine compounds of oleophilic character and limited solubility in water are co-used as an additive in the disperse oil phase.

11. The use claimed in claims 1 to 10, characterized in that oleophilic amine compounds which are free from aromatic constituents and of which the solubility in water at room temperature is no more than 1% by weight are co-used.

12. The use claimed in claimed 1 to 11, characterized in that basic amine compounds containing at least one preferably $C_{8-36}$ hydrocarbon radical are used as an additive.

13. The use claimed in claims 1 to 12, characterized in that a disperse ester oil phase containing up to 10% by weight and preferably 0.1 to 2% by weight oleophilic amine compounds, based on ester oil, is used.

14. The use claimed in claims 1 to 13, characterized in that ester oils having increased resistance to hydrolysis and containing in particular at least one branched ester-forming component, preferably in the form of an α-branch, are used.

15

15. The use claimed in claims 1 to 14, characterized in that the homogeneous aqueous phase used consists of fresh water or water containing dissolved or suspended salts, more particularly halides and/or carbonates of the alkali and/or alkaline earth metals, which if desired may even be modified seawater.

16. The use claimed in claims 1 to 15, characterized in that the disperse ester oils are used together with known inorganic and/or organic auxiliaries for limiting the rock hydration of correspondingly disposed mineral layers.

17. Water-based o/w emulsion drilling fluids for the exploratory drilling of geological formations which, in a homogeneous aqueous phase, contain a stably dispersed oil phase in quantities of 5 to 50% by weight (based on the sum of the unweighted water and oil phase) together with dissolved and/or dispersed auxiliaries for drilling fluids from the exploratory drilling of geological formations (emulsifiers, fluid loss additives, wetting agents, fine-particle weighting agents, salts, alkali reserves and disinfectants), characterized in that the predominant part of the disperse oil phase is formed by water-emulsifiable esters of monocarboxylic acids containing up to 5 carbon atoms and monohydric alcohols containing at least 6 carbon atoms and/or polyhydric alcohols, which are liquid or at least plastic at the working temperature and have flash points of at least 80°C, the carboxylic acid components of the esters of monohydric alcohols also being derivable from monocarboxylic acids containing up to 36 carbon atoms.

18. Emulsion drilling fluids as claimed in claim 17, characterized in that the disperse ester oil phase makes up at least 8% by weight and preferably no more than 40% by weight, percentage contents of the emulsified ester oil phase of 10 to 35% by weight being preferred.

19. Emulsion drilling fluids as claimed in claims 17 and 18, characterized in that the ester-forming alcohols and carboxylic acids are free from ecologically unsafe, more particularly aromatic constituents.

20. Emulsion drilling fluids as claimed in claims 17 to 19, characterized in that the ester oils may be assigned to one or more of the following subclasses:
   a) esters of $C_{1-5}$ monocarboxylic acids and monohydric and/or polyhydric alcohols, residues of monohydric alcohols containing at least 6 and preferably at least 8 carbon atoms and the polyhydric alcohols preferably containing 2 to 6 carbon atoms in the molecule,
   b) esters of monocarboxylic acids of synthetic and/or natural origin containing 6 to 16 carbon atoms, more particularly esters of corresponding aliphatically saturated monocarboxylic acids and monohydric alcohols of the type mentioned in a),
   c) esters of olefinically mono- and/or polyunsaturated monocarboxylic acids containing at least 16 and, more particularly, 16 to 24 carbon atoms and monohydric linear and/or branched alcohols of the type mentioned in a).

21. Emulsion drilling fluids as claimed in claims 17 to 20, characterized in that, where ester oils of subclass c) are present, they may be assigned to at least one of the following subclasses:
   c1) esters of which more than 45% by weight and preferably more than 55% by weight are derived from di- and/or polyolefinically unsaturated $C_{16-24}$ monocarboxylic acids,
   c2) esters of which no more than 35% by weight are derived from di- and polyolefinically unsaturated acids and of which preferably at least 60% by weight are monoolefinically unsaturated.

22. Emulsion drilling fluids as claimed in claims 17 to 21, characterized in that ester oils based on monohydric, substantially water-insoluble alcohols of oleophilic character are present.

23. Emulsion drilling fluids as claimed in claims 17 to 22, characterized in that basic amine compounds of oleophilic character and limited solubility in water which are free from aromatic constituents and which preferably contain at least one $C_{8-36}$ hydrocarbon radical are co-used in the disperse ester oil phase.

24. Emulsion drilling fluids as claimed in claims 17 to 23, characterized in that the typical auxiliaries and additives of water-based emulsion drilling fluids are also free from toxic heavy metal compounds.

25. Emulsion drilling fluids as claimed in claims 17 to 24, characterized in that they contain additives for inhibiting the water-absorption of swellable rock strata or clays.

26. Emulsion drilling fluids as claimed in claims 17 to 25, characterized in that they are adjusted to a pH value of 7.5 to 11.

## Revendications

1. Utilisation d'esters émulsifiables dans l'eau, liquides ou au moins susceptibles de déformation plastique à la température de travail et présentant des points d'inflammation d'au moins 80°C, à base d'acides monocarboxyliques ayant jusqu'à 5 atomes de carbone et d'alcools monohydroxylés ayant au moins 6 atomes de carbone et/ou d'alcools polyhydroxylés, dans le cas des esters d'alcools monohydroxylés, les restes acide carboxylique pouvant également dériver d'acides monocarboxyliques ayant jusqu'à 36 atomes de carbone, en tant que composant essentiel de la phase huileuse dispersée de fluider de forage en émulsion H/E à base aqueuse, pour une mise en exploitation non polluante de formations géologiques, qui contiennent si on le désire des alourdissants insolubles finement divisés, pour la formation de boue de forage en émulsion H/E à base aqueuse et/ou d'autres additifs tels que des émulsifiants, additifs de perte de fluide, agents mouillants, réserves alcalines et/ou adjuvants pur l'inhibition de la sensibilité accrue à l'eau de la roche forée.

2. Mode de réalisation selon la revendication 1, caractérisé en ce que l'on utilise dans le fluide de forage H/E la phase dispersée d'huile de type ester en proportions d'au moins 5 % en poids, de préférence d'au moins 8 % en poids - % en poids par rapport à la somme des fractions liquides huile de type ester/eau non alourdies - et celle-ci ne constitue de préférence pas plus de 50 % en poids, en particulier pas plus de 40 % en poids - % en poids calculé comme précédemment.

3. Mode de réalisation selon les revendications 1 et 2, caractérisé en ce que l'on utilise des esters d'alcools monohydroxylés d'origine naturelle et/ou d'origine synthétique et à caractère lipophile, ayant au moins 8 atomes de carbone.

4. Mode de réalisation selon les revendications 1 à 3, caractérisé en ce que dans l'utilisation ou l'utilisation simultanée d'huiles de type ester à base d'alcools polyfonctionnels, on utilise également des esters totaux et/ou partiels de polyols solubles dans l'eau, comportant de préférence jusqu'à 4 groupes OH par molécule, en particulier des esters d'éthylèneglycol, de propylèneglycol et/ou de glycérol.

5. Mode de réalisation selon les revendications 1 à 4, caractérisé en ce que l'on utilise des huiles de type ester qui présentent des points de solidification (point d'écoulement et de solidification) inférieurs à 0°C, de préférence inférieurs à -5°C, et en outre des points d'inflammation d'au moins 100°C.

6. Mode de réalisation selon les revendications 1 à 5, caractérisé en ce que l'on utilise en tant que phase huileuse dispersée des huiles de type ester qui, en tant que phase huileuse continue, présentent à 20°C une viscosité Brookfield (RVT) n'excédant pas 1 000 000 mPa.s.

7. Mode de réalisation selon les revendications 1 à 6, caractérisé en ce que l'on utilise des huiles de type ester qui sont exemptes de composants moléculaires toxicologiquement suspects, en particulier des fractions aromatiques, les huiles de type ester préférées dérivant d'acides carboxyliques à chaîne droite et/ou ramifiée et de préférence également d'alcools correspondants.

8. Mode de réalisation selon les revendications 1 à 7, caractérisé en ce que la phase dispersée d'huile de type ester contient des esters d'acides carboxyliques à base d'au moins l'une des sous-classes suivantes :
   a) esters d'acides monocarboxyliques en $C_1$-$C_5$ et d'alcools mono- et/ou polyfonctionnels, les radicaux à base d'alcools mcnohydroxylés comportant au moins 8 atomes de carbone, et les alcools polyhydroxylés possédant de préférence de 2 à 6 atomes de carbone par molécule,
   b) esters d'acides monocarboxyliques d'origine synthétique et/ou naturelle, ayant de 6 à 16 atomes de carbone, en particulier esters d'acides monocarboxyliques aliphatiques saturés correspondants et d'alcools monofonctionnels du type indiqué en a),
   c) esters d'acides monocarboxyliques à une et/ou plusieurs insaturations oléfiniques, ayant au moins 16, en particulier de 16 à 24 atomes de carbone, et d'alcools monofonctionnels à chaîne droite et/ou ramifiée, du type indiqué en a).

9. Mode de réalisation selon les revendica- tions 1 à 8, caractérisé en ce que les huiles de type ester selcn

17

la revendication 8, c, présentes dans la phase dispersée, sont à attribuer au moins à l'une des sous-classes suivantes :

c1) esters qui dérivent, à raison de plus de 45 % en poids, de préférence à raison de plus de 55 % en poids, d'acides monocarboxyliques en $C_{16}$-$C_{24}$ à deux et/ou plus de deux insaturations oléfiniques,

c2) esters qui dérivent, à raison de pas plus de 35 % en poids, d'acides à deux et plus de deux insaturations oléfiniques et de préférence sont à insaturation monooléfinique à raison de plus de 60 % en poids.

10. Mode de réalisation selon les revendica- tions 1 à 9, caractérisé en ce que, dans la phase huileuse dispersée, on utilise en même temps en tant qu'additifs des composés aminés basiques à caractère lipophile et à hydrosolubilité limitée.

11. Mode de réalisation selon les revendications 1 à 10, caractérisé en ce que l'on utilise en même temps des composés aminés lipophiles qui sont exempts de composants aromatiques et dont l'hydrosolubilité à la température ambiante n'excède pas 1 % en poids.

12. Mode de réalisation selon les revendica- tions 1 à 11, caractérisé en ce que l'on opère avec, en tant qu'additif, des composés aminés basiques qui comportent au moins un radical hydrocarboné ayant de préférence de 8 à 36 atomes de carbone.

13. Mode de réalisation selon les revendications 1 à 12, caractérisé en ce que l'on opère avec une phase dispersée constituée d'une huile de type ester, dont la teneur en composés aminés lipophiles va jusqu'à 10 % en poids et se situe de préférence dans la plage allant de 0,1 à 2 % en poids, dans chaque cas par rapport à l'huile de type ester.

14. Mode de réalisation selon les revendications 1 à 13, caractérisé en ce que l'on opère avec des huiles de type ester, à stabilité accrue vis-à-vis de la saponification, qui comportent en particulier au moins un composant ramifié formant un ester, de préférence sous forme d'une ramification $\alpha$.

15. Mode de réalisation selon les revendications 1 à 14, caractérisé en ce que l'on utilise, en tant que phase aqueuse homogène, de l'eau douce ou de l'eau contenant des sels, en particulier des halogénures et/ou des carbonates des métaux alcalins et/ou alcalino-terreux, dissous ou en suspension, qui peut également être si on le désire de l'eau de mer modifiée.

16. Mode de réalisation selon les revendications 1 à 15, caractérisé en ce que l'on utilise les huiles de type ester dispersées, conjointement avec des adjuvants organiques et/ou minéraux connus, pour limiter l'hydratation de roches de couches minérales disposées à cet effet.

17. Fluides de forage en émulsion H/E à base aqueuse, pour le forage de roches de formations géologiques, qui contiennent, dans une phase aqueuse homogène, une phase huileuse dispersée de façon stable, en proportion de 5 à 50 % en poids - % en poids par rapport à la somme de la phase huileuse et de la phase aqueuse non alourdies conjointement avec des adjuvants dissous et/ou dispersés pour fluides de forage utilisés dans le forage de roches de formations géologiques (émulsifiants, additifs de perte de fluide, agents mouillants, alourdissants finement divisés, sels, réserves alcalines et/ou désinfectants), caractérisés en ce que la majeure partie de la phase huileuse dispersée est constituée d'huiles de type ester émulsifiables dans l'eau, liquides ou au moins susceptibles de déformation plastique à la température ambiante, et présentant des points d'inflammation de moins de 80°C, à base d'acides monocarboxyliques ayant jusqu'à 5 atomes de carbone et d'alcools monohydroxylés ayant au moins 6 atomes de carbone et/ou d'alcools polyhydroxylés, dans le cas des esters d'alcools mono hydroxylés, les restes acide carboxylique pouvant dériver d'acides monocarboxyliques ayant jusqu'à 36 atomes de carbone.

18. Fluides de forage on émulsion selon la revendication 17, caractérises en ce que la phase dispersée d'huile de type ester constitue au moins 8 % en poids et de préférence pas plus de 40 % en poids, des concentrations de la phase d'huile de type ester émulsionnée dans la plage de 10 à 35 % en poids étant préférées.

19. Fluides de forage en émulsion selon les revendications 17 et 18, caractérisés en ce que les alcools et acides carboxyliques formant des esters sont exempts de composants écologiquement suspects, en particulier de composants aromatiques.

**20.** Fluides de forage en émulsion selon les revendications 17 à 19, caractérisés en ce que les huiles de type ester sont à attribuer à une ou plusieurs des sous-classes suivantes :

a) esters d'acides monocarboxyliques en $C_1$-$C_5$ et d'alcools mono- et/ou polyfonctionnels, les radicaux à base d'alcools monohydroxylés comportant au moins 8 atomes de carbone, et les alcools polyhydroxylés possédant de préférence de 2 à 6 atomes de carbone par molécule,

b) esters d'acides monocarboxyliques d'origine synthétique et/ou naturelle, ayant de 6 a 16 atomes de carbone, en particulier esters d'acides monocarboxyliques aliphatiques saturés correspondants et d'alcools monofonctionnels du type indiqué en a),

c) esters d'acides monocarboxyliques à une et/ou plusieurs insaturations oléfiniques, ayant au moins 16, en particulier de 16 à 24 atomes de carbone, et d'alcools monofonctionnels à chaîne droite et/ou ramifiée, du type indiqué en a).

**21.** Fluides de forage en émulsion selon les revendications 17 à 20, caractérisés en ce que, dans le cas de la présence d'huiles de type ester de la sous-classe c), ceux-ci doivent être rangés dans au moins l'une des sous-classes suivantes :

c1) esters qui dérivent, à raison de plus de 45 % en poids, de préférence à raison de plus de 55 % en poids, d'acides monocarboxyliques en $C_{16}$-$C_{24}$ à deux et/ou plus de deux insaturations oléfiniques,

c2) esters qui dérivent, à raison de pas plus de 35 % en poids, d'acides à deux et plus de deux insaturations oléfiniques et de préférence sont à insaturation monooléfinique à raison de plus de 60 % en poids.

**22.** Fluides de forage en émulsion selon les revendications 17 à 21, caractérisés en ce que sont présentes des huiles de type ester à base d'alcools monofonctionnels, pratiquement insolubles dans l'eau et à caractère lipophile.

**23.** Fluides de forage en émulsion selon les revendications 17 à 22, caractérisés en ce que, dans la phase dispersée d'huile de type ester, on utilise en même temps des composés aminés basiques à caractère lipophile et à hydrosolubilité limitée, qui sont exempts de composants aramatiques et comportent de préférence au moins un radical hydrocarboné ayant de préférence de 8 à 36 atomes de carbone.

**24.** Fluides de forage en émulsion selon les revendications 17 à 23, caractérisés en ce que les additifs et adjuvants usuels de fluides de forage en émulsion à base aqueuse sont exempts de composés à base de métaux lourds toxiques.

**25.** Fluides de forage en émulsion selon les revendications 17 à 24, caractérisés en ce qu'ils contiennent des additifs pour l'inhibition de l'absorption d'eau par des couches de roches ou des argiles gonflantes.

**26.** Fluides de forage en émulsion selon les revendications 17 à 25, caractérisés en ce qu'ils sont ajustés à un pH dans l'intervalle de 7,5 à 11.